# EUROPEAN PATENT APPLICATION

(11) **EP 0 909 729 A1**
(43) Date of publication of application: **21.04.1999**
(21) Application number: 98203307.8
(22) Date of filing: 30.09.1998
(51) Int. Cl.: B65G 65/36, B65G 69/18, B65G 65/38

(54) **Silo for bulk goods**

(30) Priority: 17.10.1997 NL 1007301
(71) Applicant: Spaans Babcock B.V., 2130 AA Hoofddorp (NL)
(72) Inventor: van der Zee, Franciscus Antonius, 1016 WC Amsterdam (NL)
(74) Representative: Hooiveld, Arjen Jan Winfried

(57) **Abstract**

A silo (1) for the storage of bulk goods, comprising a floor (2), a side wall (3) and a roof (4). The silo (1) is provided with first conveyor means (21) for vertical transport of said bulk goods within the silo (1), which first conveyor means (21) comprise a pipe (46) which is adjustable for length and which extends substantially in vertical direction within said silo (1). The pipe (46) has an upper end (41), which is connected to the interior of the silo (1) at a fixed distance from the roof (4), and a lower end (45), which is connected to second conveyor means (26) for horizontal transport of said bulk goods within the silo (1). The second conveyor (26) means are connected to the interior of the silo (1), and they are vertically adjustable between the upper end of the pipe (46) and the floor (2) of the silo (1). The silo (1) is characterized in that the pipe (21) is provided with a flexible wall (43), preferably a fold-up wall of synthetic cloth.

## Description

The invention relates to a silo for the storage of bulk goods, comprising a floor, a side wall and a roof, which silo is provided with first conveyor means for vertical transport of said bulk goods within the silo, which first conveyor means comprise a pipe which is adjustable for length and which extends substantially in vertical direction within said silo, an upper end of which pipe is connected to the interior of the silo at a fixed distance from the roof, and a lower end of which is connected to second conveyor means for horizontal transport of said bulk goods within the silo, which second conveyor means are connected to the interior of the silo and which are vertically adjustable between the upper end of said pipe and the floor of the silo.

A silo of this kind is known, it comprises a substantially cylindrical structure, wherein a column is disposed centrally with respect to the outside wall, which column is provided with a drop shaft along at least part of its length. A bridge is provided between the column with the drop shaft and the side wall, which bridge is capable of rotation in a horizontal plane around the column with the drop shaft. The bridge carries a frame by means of hoisting cables, which frame extends radially outwards with respect to the column with the drop shaft, and which is movable in the longitudinal direction of the column with the drop shaft. The frame supports a screw conveyor for moving the bulk goods within the silo upon emptying and filling of the silo. A telescopic down pipe is provided between the bridge and the frame, which down pipe extends substantially vertically within the silo and whose length can be adjusted by telescoping the telescopic pipe sections in and out. The upper end of the down pipe is connected to the bridge of the silo at a fixed distance from the roof, whilst the lower end of the down pipe is connected to the frame, which is connected to the bridge via hoisting cables, and which is vertically adjustable between the upper end of the pipe and the floor of the silo. When the silo is being filled, the down pipe transports the bulk goods vertically from the upper end of the down pipe to the lower end of the down pipe.

As a result of the guiding function of the column with the drop shaft, the frame follows the rising or descending level of the top layer of bulk goods present in the silo upon emptying and filling of the silo. When the silo is being emptied, the screw conveyor transports the bulk goods to the drop shaft in the column, after which the bulk goods, once it has fallen through the drop shaft, is discharged from the silo by means of a next screw conveyor and a long discharge screw conveyor. The drop shaft is provided with hatches which can be hoisted up, which hatches close the drop shaft exactly to the level of the top layer of the bulk goods at all times.

A drawback of the known silo is that the telescopic down pipe does not function very satisfactorily. Dust is blown from the down pipe into the interior of the silo through the sealing surfaces of the telescopic pipe sections, due to the pressure that is generated within the down pipe by the falling bulk goods. Not only does this dust considerably increase the risk of dust explosions in the silo, but the fact that persons who are present in the silo breathe in this dust constitutes a health hazard. Moreover, the dust interferes with the telescoping of the pipe sections of the down pipe, which has an adverse effect on the reliability of the silo. The settling dust furthermore leads to fouling of the other parts of the interior of the silo.

It is an object of the invention to eliminate this drawback. In order to accomplish that objective, the silo according to the invention is characterized in that the pipe is provided with a flexible wall. This makes it possible to adjust the pipe for length, whilst the pipe wall is dustproof along the length of the pipe.

One embodiment of the silo according to the invention is characterized in that the pipe wall comprises a cloth-like material, in particular a synthetic cloth. This makes it possible to fold the pipe wall. The advantage of using a synthetic cloth is that in addition to being dustproof, it is light in weight and thin, so that the cloth will take up little space when being folded.

In another embodiment, the silo according to the invention is characterized in that the pipe wall is provided with substantially annular supporting segments, in particular steel ribs. As a result of this, the pipe wall is annularly supported, so that a sufficiently wide flow channel is formed inside the pipe. Preferably, steel ribs are used as supporting segments, because they are not very thick. The thickness of the ribs is preferably 3 - 6 mm, in particular 4 mm. It is noted that the term annular is also meant to include angular, for example triangular or multiangular.

In yet another embodiment, the silo according to the invention is characterized in that said supporting segments are coaxially spaced apart in longitudinal direction, said spacing preferably being 10 - 20 cm, in particular about 15 cm. As a result of this, the material of the wall can fold up between the supporting segments when the pipe is adjusted to a smaller length.

In yet another embodiment, the silo according to the invention is characterized in that the pipe wall is provided with weights, preferably weights which are substantially annular. As a result of this, the material of the wall is pulled taut in downward direction by the force of gravity when the pipe is being adjusted to a greater length, as a result of which the flow channel inside the pipe is elongated in the longitudinal direction of the pipe. Furthermore, the material of the wall can fold up between the weights when the pipe is adjusted to a smaller length. Said weights and said supporting segments may be integrated.

In yet another embodiment the silo according to the invention is characterized in that said pipe is provided with guide means. As a result of this, the pipe can be adjusted along its longitudinal axis without buckling when being adjusted to a smaller length.

In another embodiment, the silo according to the invention is characterized in that the guide means comprise at least two, preferably four guide poles and/or partitions, which are attached to the second conveyor along the circumference of the lower end of the pipe. As a result of this, the folded part of the pipe is supported in a direction transversely to the longitudinal direction of the pipe, and the pipe wall is also supported during folding and unfolding when the pipe is being adjusted for length.

In yet another embodiment, the silo according to the invention is characterized in that the guide means comprise at least two cables on either side of the pipe. As a result of this, the pipe is supported along its entire length. In particular in embodiments wherein the pipe does not comprise supporting segments in its wall, it is advantageous to fit at least three cables near the wall in the longitudinal direction of the pipe. Not only does this provide a guide for the pipe, but it also ensures that a sufficiently wide flow channel is present.

In yet another embodiment, the silo according to the invention is characterized in that the pipe is provided with a continuous flow channel in its longitudinal direction, in particular a continuous flow channel whose inside diameter is substantially equal to the inside diameter of the pipe. As a result of this, the bulk goods can fall downwards through the interior of the pipe without impediment, so that the handling capacity of the pipe is at least equal to the handling capacity of the second conveyor means and/or the capacity of the conveyor means by which the bulk goods is supplied to the pipe.

The invention furthermore relates to a method for filling a silo with bulk goods.

The invention will be explained in more detail hereafter with reference to the drawing, which illustrates a preferred embodiment. In the drawing:
- Figure 1 is a schematic cross-sectional view of a silo according to the invention;
- Figure 2 is a schematic representation of a part of the column with the drop shaft;
- Figure 3 is a schematic representation of a part of Figure 1.

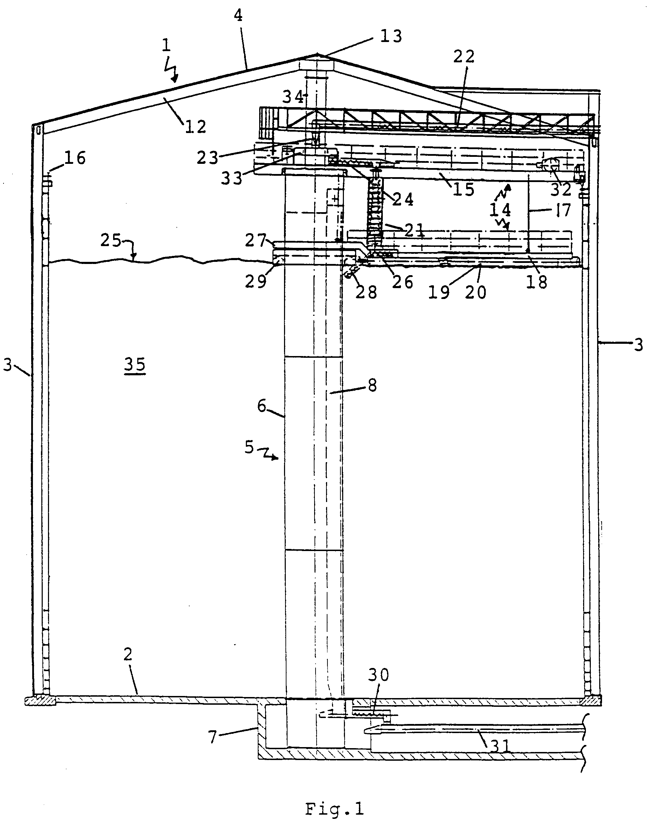

Figure 1 shows a cross-section of a substantially cylindrical silo 1 comprising a floor 2, a side wall 3 and a roof 4. A column 5 is centrally disposed on the floor 2 of the silo 1. Column 5 comprises a steel cylinder 6, which is anchored in a recessed portion 7 of the floor. A longitudinally extending drop shaft 8 is recessed in the cylinder over a large part of the length thereof. The height of the side wall 3 of silo 1 of Figure 1 is about 32 m, whilst the diameter of the silo 1 is about 48 m. The surface area of floor 2 of silo 1 is about 1266 m².

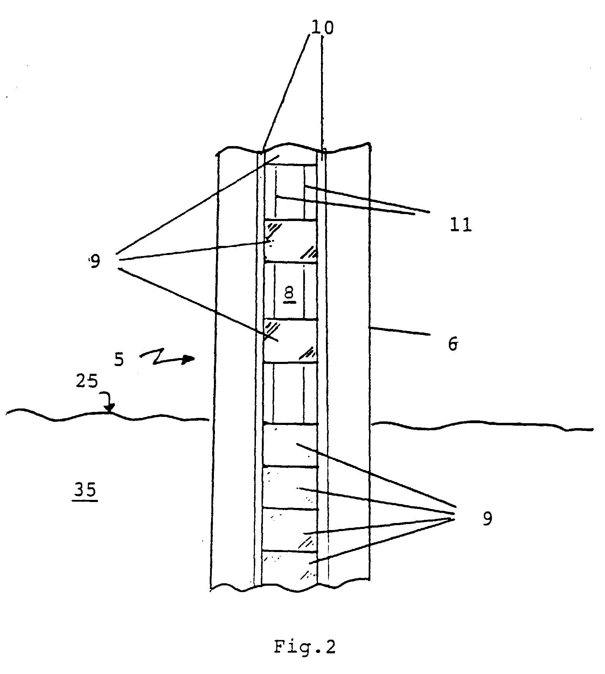

Referring to Figure 2, drop shaft 8 is closed by a number of hatch-shaped segments 9, which are mounted in a guide 10 near the outer shell of cylinder 6. Segments 9 are interconnected in spaced-apart relationship by means of two parallel hoisting chains extending in the longitudinal direction of chamber 8.

Again referring to Figure 1, column 5 is axially continuous and rigid. Column 5 is fixedly connected to roof trusses 12 near ridge 13 of roof 4 of silo 1. The column 5 with the drop shaft 8 thus forms a rigid connection between the floor 2 and the roof 4 of the silo. Cylinder 6 of column 5 is connected to roof trusses 12 by means of a ring (not shown), to which an octagonal star is secured. Said ring is thereby connected to the upper side of part 34 of cylinder 6, and the eight sides of the star are each connected to a roof truss.

A bridge 15 is present between column 5 and side wall 3 of the silo, which bridge is rotatably supported on the thick part of column 5 via support wheels, and which is connected to side wall 3 by means of wheels which are supported on a guide rail 16. Bridge 15 carries a frame 18 via hoisting cables 17, which frame can be moved in the longitudinal direction of column 5 by means of a winch 32. Frame 18 supports two parallel screw conveyors 19, 20 of opposite pitch. A vertically extending pipe 21 having a flexible wall and being adjustable for length is provided between bridge 15 and frame 18. The pipe 21 and its operation will be discussed further on in this application. The column with the drop shaft and the conveyor which is rotatable with respect to the longitudinal axis thereof are electrically connected by means of a cable (not shown) which is fitted near the part 34 having the smaller diameter. Power supply signals and control signals can be transmitted via said cable. The cable is connected to a switch box present outside the silo.

The filling of the silo 1 takes place as follows. Bulk goods is supplied from outside silo 1 via a screw conveyor 22. Under the influence of the force of gravity, the bulk goods falls via a pipe 23 on a ring conveyor 33, and from said ring conveyor 33 it is carried, by means of a screw conveyor 24 which is present on bridge 15, to the pipe 21, which has a flexible wall and which is adjustable for length. The bulk goods falls via pipe 21 on frame 18, which is present at the level of the top layer of the bulk goods 35 which is already present in silo 1. The bulk goods being supplied is transported to an opening in frame 18 via a screw conveyor 26, where it falls between screw conveyors 19 and 20. The bulk goods is deposited on said top layer 25 by said screw conveyors in a bead-like layer of substantially uniform thickness, which extends radially outwards with respect to column 5 with the drop shaft 8. After such a layer has been deposited, conveyor 14 is rotated through an angle of 3 - 5° with respect to the longitudinal axis of the column with the drop shaft 8 by means of a drive unit (not shown). During said rotation, a guide member 27 of frame 18 is led around column 5.

After the conveyor 14 has made a revolution in steps in a horizontal plane, frame 18 is moved along column 5 to a higher plane by means of hoisting cables 17, so that the windings of the screw conveyors 19, 20 will be positioned a predetermined distance above the top layer 25 of the bulk goods. During said longitudinal movement, guide part 27 is also guided along column 5 with the drop shaft 8. The length of the flexible pipe 21 is reduced when the frame is being moved to a higher plane, because the flexible wall is folded, as will be explained hereafter. Once the frame has arrived in said new plane, the direction of rotation of the conveyor 14 with respect to column 5 with the drop shaft 8 is reversed. When the silo of Figure 1 contains potato flour, for example, potato flour is constantly supplied to the silo during the period from August until February, whereby the level of the top layer of the bulk goods rises by about 1 m per week.

The emptying of the silo takes place as follows. The stacked hatch-shaped segments 9 are hoisted up along guide 10 of drop shaft 8 in cylinder 6 by means of hoisting chains 11, so that an opening is formed in drop shaft 8 just below top layer 25 (Figure 2). Screw conveyors 19, 20 transport the bulk goods radially inwards from top layer 25 to turning screw 28, which functions to loosen the material, and to a row of blades 29. Conveyor 14 thereby rotates in a horizontal plane around column 5 in a continuous movement. Row of blades 29 is thereby rotated around column 5, so that the bulk goods is carried to the opening op drop shaft 8 by the blades of row of blades 29. The bulk goods falls down via drop shaft 8 in column 5, and it is discharged to the outside via screw conveyor 30 and long discharge screw conveyor, by way of the recessed portion 7 of floor 2 of silo 1.

After conveyor 14 has made a revolution in a horizontal plane, frame 18 is moved to a lower plane via hoisting cables 17, so that the windings of screw conveyors 19, 20 will engage in the bulk goods of top layer 25 over the desired depth. Once arrived at a new plane, the direction of rotation of conveyor 14 is reversed. Furthermore, that screw conveyor of said pair of screw conveyors 19, 20 is driven which rotates in the right direction for transporting the bulk goods radially inwards, seen in the direction of rotation of conveyor 14. The speed at which the level of the top layer falls depends on the capacity of the screw conveyors 19, 20, among other things, and it will be about 1 m per week, for example, with an average capacity of about 10 tons per hour.

The electric connection between column 5 with the drop shaft 8 and conveyor 14, which is rotatable with respect thereto, is provided by a cable (not shown), because conveyor 14 only makes about one revolution each time.

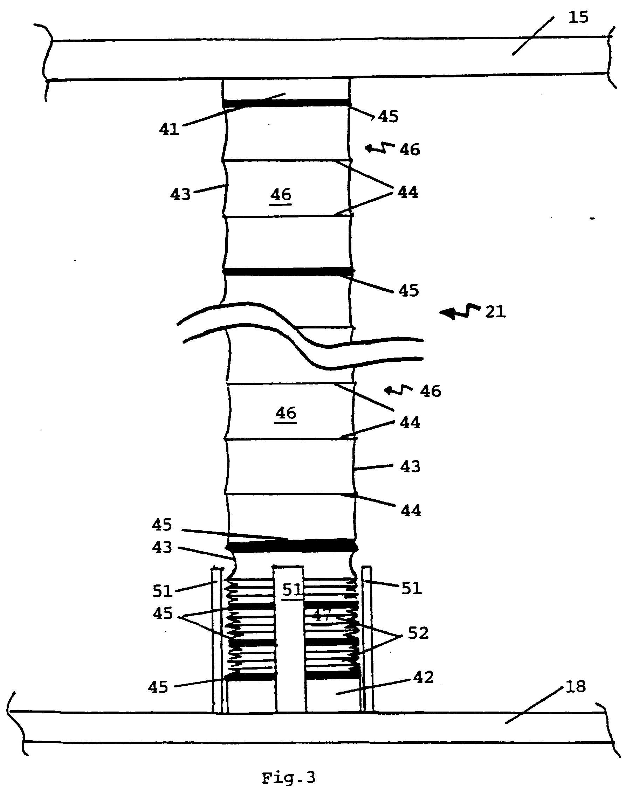

Referring to Figure 3, pipe 21 is schematically illustrated therein. The pipe has a diameter of 600 mm, and a length which is adjustable between 1.2 m and 32 m. The upper end 41 of pipe 21 is connected to column 6, via bridge 15, at a fixed distance from roof 4 of silo 1, whilst the lower end 42 of pipe 21 is connected to frame 18, which frame 18 is vertically movable along column 6. Pipe 21 is disposed near column 6, and extends substantially parallel thereto. Pipe 21 has a flexible wall 43 of synthetic cloth. Wall 43 is provided with spaced-apart, annular steel ribs 44, as a result of which a continuous flow channel extending along the length of pipe 21 is formed inside pipe 21, the inside diameter of which is substantially equal to the inside diameter of pipe 21. Pipe 21 comprises a number of pipe sections 46, each having a length of 3 m, which are coupled together by means of quick-action couplings 45. Said quick-action couplings for example comprise a substantially annular member having a U-shaped cross-section with inwardly extending legs. When two pipe sections are being coupled, the diameter of said member is reduced after said member has been placed round the ends of the two pipe sections by reducing the circumference thereof by means of an adjusting screw.

Ribs 44 are supported on frame 18 at the location of the lowermost part 47 of pipe 21, whilst the material of wall 43 is folded therebetween.

When frame 18 moves upwards while the silo 1 is being filled, the material of wall 43 that is present between the supported rib 44 and the lowermost unsupported rib 44 will be folded as soon as a rib 44 is supported by frame 47 near said lowermost part 47, in such a manner that the passage inside pipe 21 remains substantially clear. Preferably, the material of wall 43 of pipe 21 comprises weakened parts so as to have the folding of the material take place in a controlled manner.

Figure 3 shows three of four guide poles 51 which are disposed around the lowermost part 47 of pipe 21, which guide the pipe during folding and unfolding. The length of the guide poles corresponds with the minimum distance between bridge 15 and frame 18, which is 1.2 m in the present example. Guide poles 51 also provide support for the folded lowermost part 47 of pipe 21 when said part is loaded in a direction transversely to its longitudinal axis.

As soon as two folded pipe sections 52 are present in the space between guide poles 51 during the filling of the silo, the depositing of bulk goods is interrupted and the ends of the folded pipe sections 52 are uncoupled by enlarging the diameter of the quick-action couplings 45 by means of adjusting screws. Then the uncoupled pipe sections 52 are removed from pipe 21 one by one, and the lowermost unsupported pipe section 46 is coupled to end 42. Subsequently, depositing may be resumed.

Pipe 21 is not used when the silo is being emptied. Consequently, it is preferred not to place pipe sections 46 between bridge 15 and frame 18 until the silo is to be filled, and that in pairs during the lowering of frame 18.

When changing over from emptying to filling of the silo, the frame must be raised once, therefore, so that the pipe sections can be placed during downward movement.

When pipe sections 46 having a length of 3 m are used, two pipe sections 46 must be removed about every 6 weeks in the present example. The coupling and removal of the folded pipe sections 52 is carried out manually by an operator who is present inside the silo 1, near frame 18. By using supporting segments 44 having different diameters, the pipe can be stacked closer together, which makes it possible to select a larger time interval for removing the pipe sections 46.

When a pipe 21 which is made in one piece, which does not comprise supporting segments 44 and which has a wall 43 of very thin synthetic cloth is used, the pipe 21 can be folded up as a whole in the space present between bridge 15 and frame 18 in the highest position of frame 18. The advantage of this is that manual removal of pipe sections is no longer necessary; when pipe wall 43 is damaged, however, the whole pipe 21 will have to be removed.

Summarizing the above, according to the invention, pipe 21 with flexible wall 43 is adjustable for length by folding and unfolding the material of wall 43, whilst the material of wall 43 seals pipe 21 dust-tight over the entire length thereof. The bulk goods which falls vertically downwards through the passage does not cause any dust to permeate through the pipe wall into the interior of the silo.

It is noted that the invention is not limited to the above-described embodiment, but that other embodiments are possible within the scope of the invention.

## Claims

1. A silo for the storage of bulk goods, comprising a floor, a side wall and a roof, which silo is provided with first conveyor means for vertical transport of said bulk goods within the silo, which first conveyor means comprise a pipe which is adjustable for length and which extends substantially in vertical direction within said silo, an upper end of which pipe is connected to the interior of the silo at a fixed distance from the roof, and a lower end of which is connected to second conveyor means for horizontal transport of said bulk goods within the silo, which second conveyor means are connected to the interior of the silo and which are vertically adjustable between the upper end of said pipe and the floor of the silo, characterized in that said pipe is provided with a flexible wall.

2. A silo according to claim 1, characterized in that the pipe wall comprises a cloth-like material, in particular a synthetic cloth.

3. A silo according to claim 1 or 2, characterized in that the pipe wall is provided with substantially annular supporting segments, in particular steel ribs.

4. A silo according to claim 3, characterized in that said supporting segments are coaxially spaced apart in the longitudinal direction of the pipe, with said spacing preferably being 10 - 20 cm, in particular about 15 cm.

5. A silo according to any one of the claims 3 or 4, characterized in that said supporting segments lie in one plane at all times, which plane extends substantially perpendicularly to the longitudinal axis of the pipe.

6. A silo according to any one of the preceding claims, characterized in that the pipe wall is provided with weights.

7. A silo according to claim 6, characterized in that said weights are substantially annular.

8. A silo according to any one of the preceding claims, characterized in that said pipe is provided with guide means.

9. A silo according to claim 8, characterized in that said guide means comprise at least two, preferably four guide poles and/or partitions, which are attached to the second conveyor along the circumference of the lower end of the pipe.

10. A silo according to any one of the preceding claims 8 or 9, characterized in that said guide means comprise at least two cables on either side of said pipe.

11. A silo according to any one of the preceding claims, characterized in that the pipe diameter ranges between 300 and 900 mm, in particular between 500 and 700, preferably between 550 and 650 mm.

12. A silo according to any one of the preceding claims, characterized in that the length of said pipe is adjustable between 1.0 and 36 m, in particular between 1.2 and 32 m.

13. A silo according to any one of the preceding claims, characterized in that said pipe comprises at least two pipe sections, which are coupled in longitudinal direction by coupling means.

14. A silo according to any one of the preceding claims, characterized in that pipe is provided with a continuous flow channel in its longitudinal direction.

15. A silo according to claim 14, characterized in that the inside diameter of said flow channel is substantially equal to the inside diameter of the pipe.

16. A pipe or pipe section obviously suitable for use in a silo according to any one of the preceding claims.

17. A method for filling a silo according to any one of the preceding claims 13 - 15 with bulk goods, wherein said second conveyor means are moved vertically from the floor to the upper end of said pipe during filling, and wherein the pipe wall is folded near the lower end of said pipe, and wherein, each time a pipe section has been folded, the folded pipe section is uncoupled and removed from said pipe.
